# EUROPEAN PATENT APPLICATION

(11) **EP 4 802 875 A1**
(43) Date of publication of application: **09.09.2026**
(21) Application number: 26162247.6
(22) Date of filing: 04.03.2026
(51) Int. Cl.: A01D 34/135, A01D 34/14, A01D 34/16

(54) **A MOWING SYSTEM WITH A DOUBLE-BLADE CUTTING BAR AND A TWO-WHEELED TRACTOR**

(30) Priority: 06.03.2025 IT 202500004620
(71) Applicant: Losi Vittorio S.r.l., 40061 Minerbio (BO) (IT)
(72) Inventor: LOSI, Roberto, 40051 Altedo di Malalbergo (BO) (IT)
(74) Representative: Dall'Olio, Christian

(57) **Abstract**

A mowing system comprising a support part, a first blade (1), a second blade (2), a drive transformation unit (101), a connecting part (110), an input part (3) which is a part of the second blade (2) or which is connected so as to transmit alternating drive to the second blade (2) with respect to the support part (6) and the at least a coupling unit (40, 50) for fixing the input part (3) to the connecting part (110) so that the input part (3) is brought into movement. The support part (6) comprises at least a guide (61, 62) and the at least a coupling unit (40, 50) engages the at least a guide (61, 62) so as to limit or prevent a displacement of the connecting part (110) in at least a direction that is not parallel to the second axis (X2) and/or a rotation, enabling displacements in a parallel direction to the second axis (X2).

## Description

The present invention relates to the technical sector concerning mowing systems, in particular mowing systems with a double-blade cutting bar. The invention is preferably, though not exclusively, applicable in a two-wheeled tractor or two-wheeled motor mower, of a type which might be used, for example, in a tracked tractor or a four-wheeled tractor.

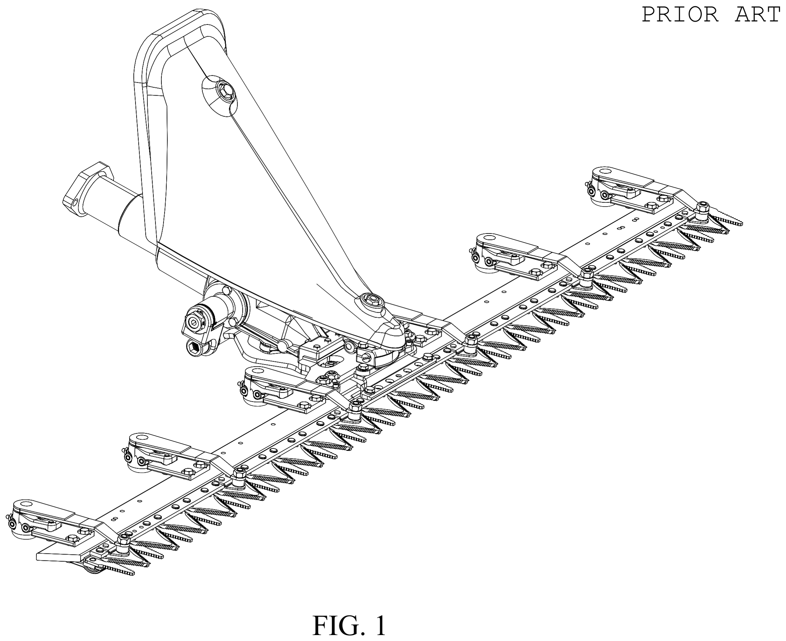

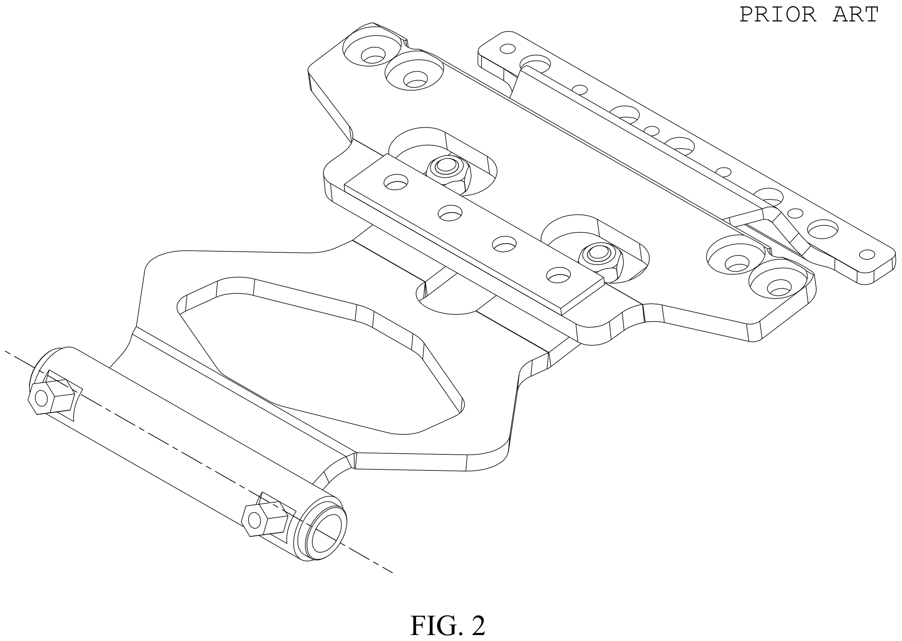

The term "cutting bar" derives from the fact that the cutting assembly comprises a bar that extends in the direction of the cutting width. The term "cutting bar" includes the whole cutting assembly, which comprises the bar, a first cutting blade and an element or unit for transmitting the drive to the cutting blade; in the case of a double blade the cutting bar comprises a second blade and a second element or unit for transmitting the drive to the second cutting blade. Typically, the cutting bar is connected to a drive transformation unit, preferably in an oil bath, which transfers the power that a rotating shaft receives, such as for example a power take-off of a tractor. The mowing system comprises the drive transmission/transformation unit and the cutting bar. Figure 1 illustrates a mowing system with a double-blade cutting bar, of known type, in which the mechanical drive is used to obtain a straight drive, or substantially straight, and alternating, of the first cutting blade and the second cutting blade. Figure 2 illustrates some of the components of figure 1, in particular a connecting part, typically called a connecting plate, which is configured to transmit the movement to a part that is fixed to the blade or which is coupled to the blade so as to transmit the alternating drive. In greater detail, figure 2 illustrates, on the right, a part with holes for the connection to the second blade by means of bolts; the same part is connected to the connecting part by two bolts which are visible through the windows of a support part that is fixed to a box of the drive transformation unit.

Typically the mowing system is configured to receive mechanical power in input, for example from a shaft of a two-wheeled tractor, and comprises a drive transformation unit in an oil bath which has two outputs so as to place the mowing blades in alternating motion. This configuration has numerous advantages, and in particular can enable the reduction of vibrations towards the drive transformation unit in the oil bath, due to the compensating of the accelerations and the decelerations to which the two mowing blades are subjected, and can increase the relative velocities of the blades, given a same input power to the drive transformation unit.

An example of a mowing system with a double-blade cutting bar is described in European Patent EP1125490 belonging to the same Inventor; other examples of mowing systems and of drive transformation units in an oil bath are illustrated in documents DE3711265A1, US4023334A and DE1507358A1. Still further examples of mowing systems are available on the internet site https://www.losilvb.it.

A further example of a mowing system with a double-blade cutting bar is described in document JP2016049082A. In this last document, the drive to the blade originates from a part that is: rotatable with respect to the support, as it is hinged to the support; moved by a cam at a first end; and coupled to a part that is solidly constrained to the second blade at a second end, opposite the first end.

The present trend in the market is to provide mowing bars with a cutting width that is ever larger, with a consequent increase in the stresses to which the components of the mowing system are subjected. This leads to greater wear and/or a higher risk of breakage for the components and/or an increased need for maintenance. Both the blades and, possibly, the bar can be constituted by two parts; the working extension of the blades in the direction of the alternating drive defines the cutting width.

In more general terms, regardless of the width of the cutting bar, the search for improved performance leads to an increase in stresses and/or variations in the type of stresses to which the components are subjected. All of the foregoing takes place in a context characterised by vibratory phenomena and by a working environment with detritus, dusts, mud and other external agents that are particularly aggressive.

In this regard the expert in the sector knows the special demands for maintenance and adjustment of the plays in the mowing bars and the mowing systems in general. The constant lubrication of the components, guaranteed by avoiding contaminations with the external agents, has not only reduced wear but has also had positive effects on the maintenance of efficiency and on the reduction of the vibrations towards the operator.

There is therefore a pressing need for solutions that reduce the damaging effects on the components during the operation of the mowing system and which, at the same time, are easy and/or economical to apply, at least with respect to a complete re-designing or a resizing and/or change in the materials used for the components; it is also preferable to maximise the number of existing components utilisable, or potentially utilisable, with the novel solutions.

The present invention intends to obviate one or more drawbacks of the prior-art solutions.

A first aim of the present invention is to provide a mowing system that reduces the impact of the stresses induced in the functioning, by a blade, towards the drive mechanism and/or by the drive mechanism towards the blade.

An aim of some embodiments is to provide a mowing system that guarantees good working life of the components.

A still further aim of some embodiments is to provide a mowing system with reduced maintenance and/or easy to maintain and/or economical, especially given a same cutting performance and/or ease of use of the mowing system.

A still further aim of some embodiments is to provide a mowing system with a large cutting width.

These and other aims which will be clear to the expert in the sector from a reading of the description that follows are attained with a mowing system with a double-blade cutting bar and a tractor according to the contents of the claims.

According to the teachings of the present description, the mowing system with a double-blade cutting bar comprises a support part, a first blade, a second blade, a drive transformation unit, a connecting part, and input part and at least a coupling unit.

The first blade is movable with respect to the support part along, or substantially along, a first axis and the second blade is movable with respect to the support part along, or substantially along, a second axis which is parallel, or substantially parallel, to the first axis.

The drive transformation unit comprises an input for receiving drive, a first output for supplying drive to the first blade and a second output for supplying drive to the second blade. The connecting part is connected to the second output so as to receive alternating drive according to another axis parallel to the second axis.

The input part is a part of the second blade or is connected to the second blade so as to transmit alternating drive to the second blade with respect to the support part.

The at least a coupling unit is configured for fixing the input part to the connecting part so that the input part is brought into movement.

The support part advantageously comprises at least a guide and the at least a coupling unit engages the at least a guide so as to limit or prevent a displacement of the connecting part with respect to the support part in at least a direction that is not parallel to the second axis and/or so as to limit a rotation of the connecting part with respect to the support part, enabling displacements of the connecting part with respect to the support part in a direction that is parallel to the second axis.

According to the teachings of the present description, the tractor comprises a mowing system according to the present description and a motor that is connected to the input in order to set it in rotation; the tractor is preferable two-wheeled or is a motor mower, known in technical jargon as a mower.

Specific embodiments of the invention will be described in the following part of the present description, according to the contents of the claims and with the aid of the appended figures, in which:
- figure 1 is an axonometric view of a mowing system with a double-blade cutting bar of known type which reproduces the teachings of European Patent EP1125490;
- figure 2 is an axonometric view of some of the components of the mowing system of figure 1 which enable the movement of one of the blades;
- figure 3 is an axonometric view of an embodiment of a mowing system with a double-blade cutting bar according to the invention;
- figure 4 is a schematic lateral view of a two-wheeled tractor with the mowing system with double-blade cutting bar of figure 3 fitted;
- figure 5 is a lateral view of the mowing system with a double-blade cutting bar of figure 3 and include the trace line of the cutting plane of figure 6;
- figure 6 is a section view of the drive transformation unit of the mowing system with a double-blade cutting bar of figure 3, which follows the teachings of European Patent EP1125490;
- figure 7 is an axonometric view of some of the components of the mowing system of figure 3 that enable the movement of one of the blades, alike to what is illustrated in figure 2, the point of view is from the opposite side with respect to figure 5, and from above;
- figure 8 is the view of figure 7 with a cover removed to enable viewing other components;
- figure 9 is a view of a support part visible in figure 8, from the opposite side of the support part with respect to the view of figure 8;
- figure 10 is a view from below, with reference to the reference system of figure 3 and 5, of some of the components of the mowing system of figure 3 that enable the movement of one of the blades, and also illustrates the trace of the cutting plane of figure 11;
- figure 11 is a section view of figure 10 with an indication of the detail of the following figure;
- figure 12 is a view of figure 11 in larger scale;
- figure 13 is a view from below, orthogonal to a surface of the support part, of some of the components of another embodiment of the mowing system according to the invention, equivalent to what is illustrated in figure 10, and also illustrates the trace of the cutting plane of figure 14;
- figure 14 is a section view of figure 13;
- figure 15 is an axonometric view of the components of figure 13.

With reference to the appended figures, reference numeral 100 denotes a mowing system with a double-blade cutting bar (10).

The references are included for ease of understanding of the invention, but are not intended to limit the scope of protection.

An embodiment of the mowing system (100) comprises a support part (6), a first blade (1), a second blade (2), a drive transformation unit (101), a connecting part (110), an input part (3) and at least a coupling unit (40, 50).

The first blade (1) is movable with respect to the support part (6) along, or substantially along, a first axis (X1). Here, as in the rest of the document, the term "axis" is used as a synonym of "straight".

The second blade (2) is movable with respect to the support part (6) along, or substantially along, a second axis (X2) which is parallel, or substantially parallel, to the first axis (X1).

In other words, the first blade (1) and the second blade (2) move with straight motion in the same direction, a condition that characterises a double-blade cutting bar (10). This specification is introduced at this point to state that in the realising and/or the use of the blades small disalignments or movements can occur which make the drive not exactly rectilinear or the first blade (1) and the second blade (2) exactly aligned to one another.

As mentioned in the description of the prior art, the first blade (1) and/or the second blade (2) might be realised, and typically is realised, with a number of parts solidly constrained to one another.

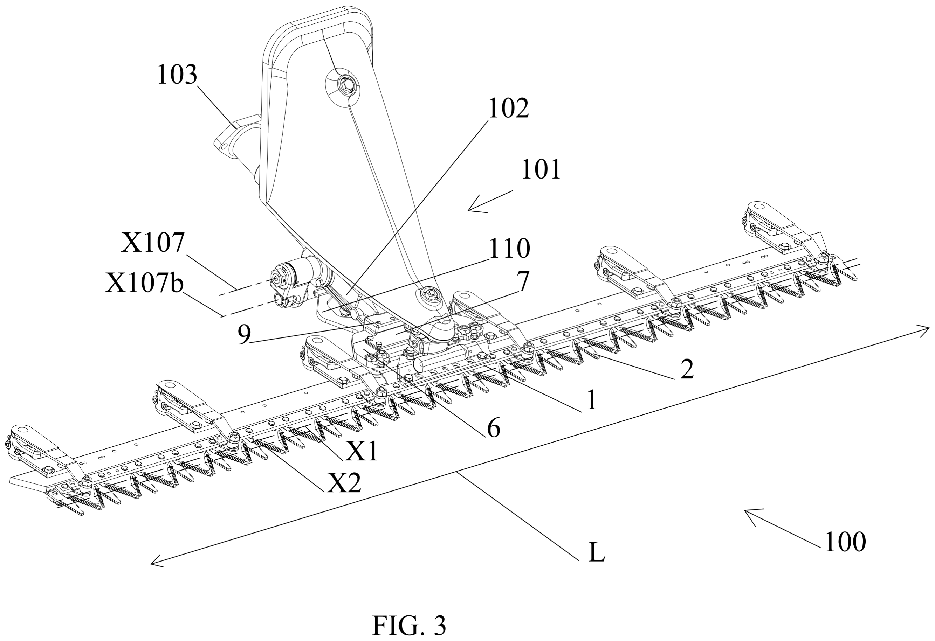

As shown by way of example in figures 3, 5 and 6, and as described in European Patent EP1125490, the drive transformation unit (101) comprises an input (103) for receiving drive, a first output (106) for supplying drive to the first blade (1) and a second output (107) for supplying drive to the second blade (2).

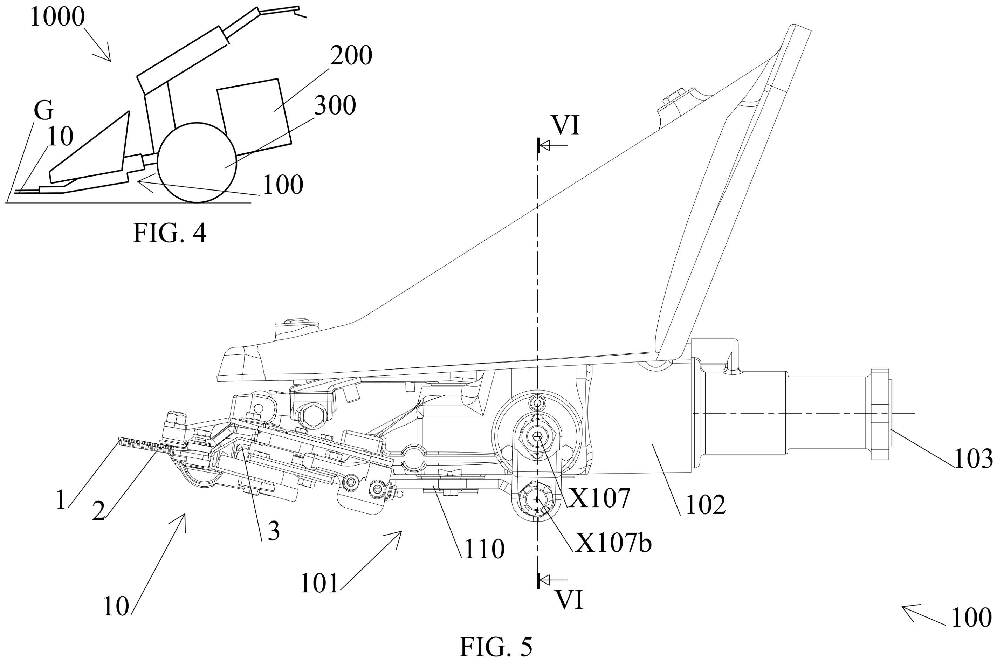

The connecting part (110) is connected to the second output (107) so as to receive alternating drive according to another axis (X107b) parallel to the second axis (X2). In other words, with reference to figures 5, 6 and 7, the second output (107) transmits, at least, an alternating translating movement to the connecting part (107) along the other axis (X107b) which is parallel to the second axis (X2); it preferably transmits only an alternating translating movement according to the other axis (X107b).

The input part (3) is a part of the second blade (2) or is connected to the second blade (2) so as to transmit alternating drive to the second blade (2) with respect to the support part (6).

The at least a coupling unit (40, 50) is configured for fixing the input part (3) to the connecting part (110) so that the input part (3) is set in movement.

The support part (6) advantageously comprises at least a guide (61, 62) and the at least a coupling unit (40, 50) engages the at least a guide (61, 62) so as to limit or prevent, preferably to prevent or substantially prevent, a displacement of the connecting part (110) with respect to the support part (6) in at least a direction that is not parallel to the second axis (X2) and/or so as to limit, preferably prevent or substantially prevent, a rotation of the connecting part (110) with respect to the support part (6), enabling displacements of the connecting part (110) with respect to the support part (6) in a direction that is parallel to the second axis (X2).

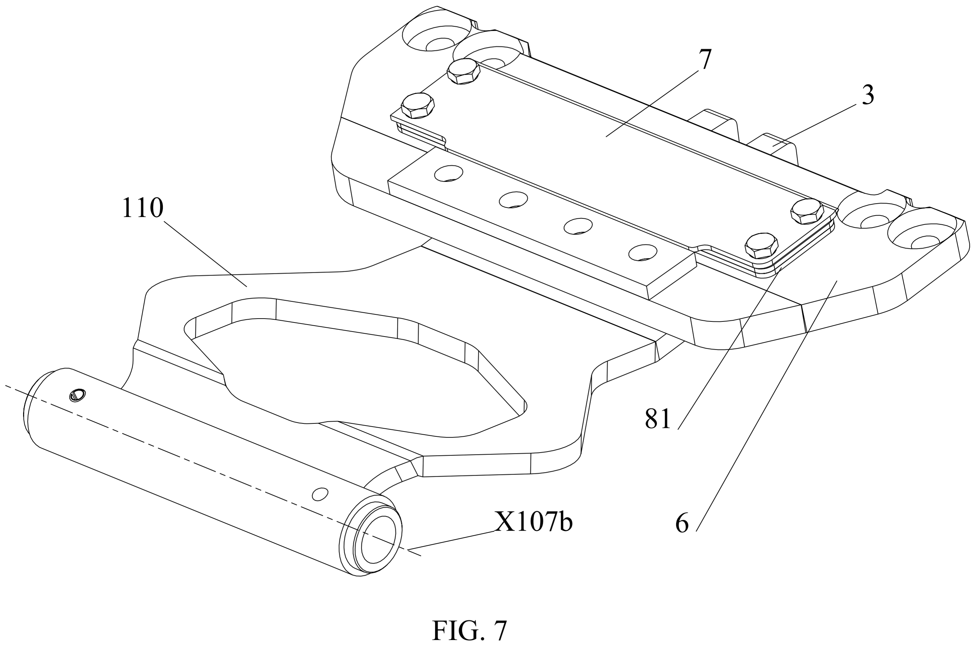

The connecting part (110), known in the technical field as the connecting plate, brings the second blade (2) to move, generated by the drive transformation unit (101) such that the second blade (2) moves in the direction of the first blade (1), in an opposite direction, thus making the cut. In particular, the connecting part (110) is connected to an input part (3) which might be solidly constrained or be in one piece with the second blade (2) or which activates a movement group which transmits the linear movement to the second blade (2) using known methods, for example as included in the Applicant's internet site or visible in figure 2. With reference to the example embodiment of the input part (3) visible in figure 7, the two protuberances that can be observed on the right are used to set in alternating motion a body that pushes walls solidly constrained to the second blade (2); again by way of example, the two protuberances might be used to provided alternating motion to a cursor which is located between the same protuberances, and fixed to the second blade (2), and is movable with respect to the support part (6), alike to what occurs for the first blade (1).

As can be observed in figures 5, 8 and 12, the connecting part (110) is a distinct body from the input part (3) and extends in an orthogonal direction to the first axis (X1) so as to connect the second output (107) to the input part (3). Preferably, as clearly shown by way of example in the appended figures of the drawings, with the second blade (2) configured to be more proximal to the ground (G) with respect to the first blade (1), the connecting part (110) extends beneath the support (6), i.e. is configured to be closer to the ground with respect to the support (6), so as to have the drive transformation unit (101) in a more retracted position.

In figure 2, two coupling groups can be observed, made using a respective bolt, which make the input part (3) solid with the connecting part (110). In the coupling realised by the at least a coupling unit of figure 2, forces and movements that are not parallel to the desired direction of the drive of the second blade (2) can be transferred towards and/or from the second blade (2). According to the teachings of the present description, the mowing system (100) is configured so as to reduce or avoid these transfers so as to limit or substantially eliminate the stresses induced on the components of the mowing system (100) and increase the working life of the components.

This is particularly noted on increasing the cutting width (L) which determines an increase in the undesirable forces and movements, as will be explained further in the following.

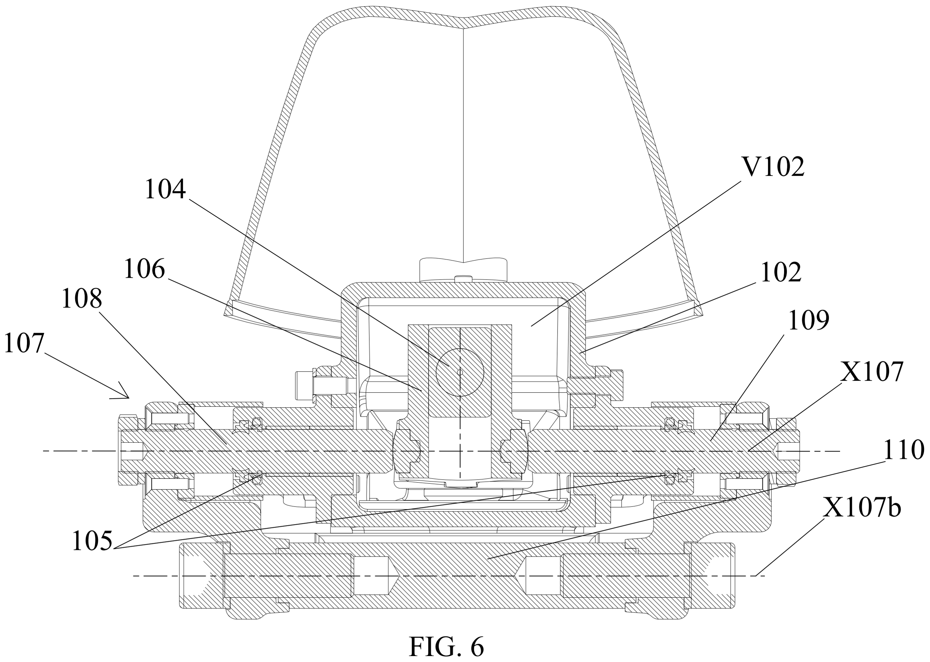

As can be observed in figures 5 and 6 the connecting part (110) might rotate with respect to a guide axis denoted by reference X107 and, possibly, in the case of failure of the connection, about the other axis denoted by reference X107b. In the preferred embodiments visible in the appended figures, the at least a coupling unit (40, 50) engages the at least a guide (61, 62) so as to prevent the rotation about the guide axis (X107) and, consequently, about the other axis (X107b).

As can be observed in the appended figures, apart from small disalignments, small variations due to the mode of transmission of the drive and variations due to the wear caused by the work cycles, the first axis (X1), the second axis (X2), the guide axis (X107) and the other axis (X107b) are parallel to one another.

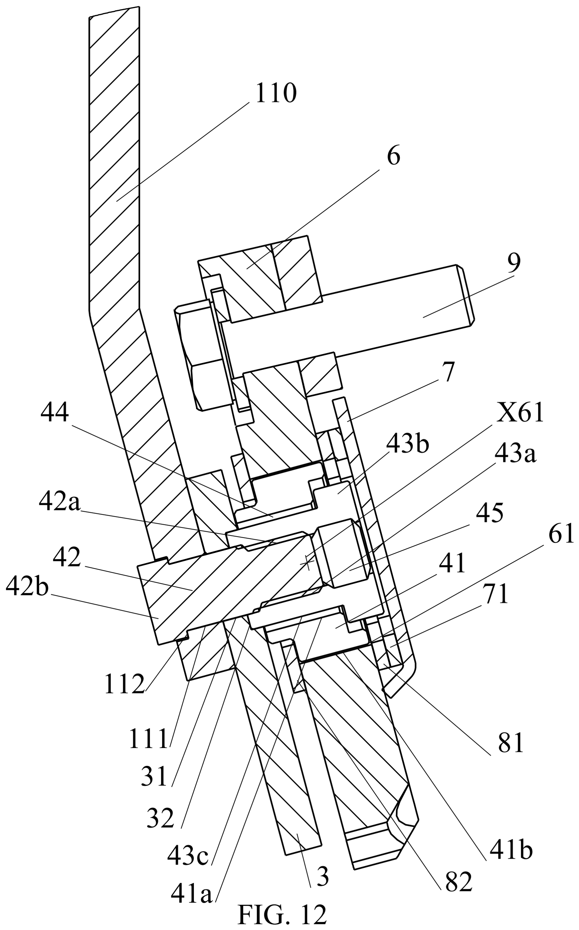

According to the configuration of the mowing system (100), it might be sufficient to prevent movement along an orthogonal direction to the direction of the second axis (X2). Among other things, this would be sufficient also in the case of the embodiments of the appended figures: observing figure 12, it can be understood how the rotation of the connecting part (110), with respect to the guide axis (X107) parallel to the second axis (X2), is already prevented by the engagement of a first coupling unit (40) in a first guide (61) as a consequence of the fact that the first guide is applied on an inclined plane with respect to the horizontal plane passing from the guide axis (X107), so that a rotation would determine a component that is parallel to the direction that is limited or prevented by the first guide (61). If it is then considered that in the example of figure 12 the first guide (61) is realised in the thickness of the support part (6) and that abutments (81, 82) are inserted, it becomes clear how the engagement of the at least a coupling unit (40, 50) in the at least a guide (61, 62) impedes the rotation of the connecting part (110), i.e. any displacement in a direction lying in the plane represented in figure 12.

The teachings of the present description might be applied to the mowing system (100) in a more or less simple way. In fact a singe bolt might be sufficient that secures the connecting part (110) and the input part (3) and that acts as a cursor with respect to the support part (6), for example by engaging a slot which receives the nut. There are however efficiency needs in the transmission of the drive to the second blade (2) and effectiveness requirements of the solution in the context of the use of the mowing system (100) which lead to preferring the solutions described in the following.

Preferably:
- the at least a coupling unit (40, 50) comprises a first coupling unit (40) which comprises a first engagement part (41) and a first coupling part (42) which is in one piece with or is connected to the first engagement part (41);
- the input part (3) comprises a first hole (31);
- the connecting part (110) comprises a respective first hole (111);
- the first coupling part (42) engages the first hole (31) and the respective first hole (111);
- the at least a guide (61, 62) comprises a first guide (61) which is engaged by the first engagement part (41) and which is configured to linearly guide the first engagement part (41) along a first guide axis (X61) parallel to the second axis (X2).

Similarly to the above, the first engagement part (41) might be a nut or even the head of a body that engages the first hole (31) and the respective first hole (111) and the nut or the head might be slidable with respect to the support part (6) due to the first guide (61).

With this it is already possible to obtain the effect of prevention torsions or stresses that wear and reduce the working life of the components of the mowing system (100).

It is however preferable that between the first coupling part (42) and the first guide (61) a bushing, a sliding bearing or a roller bearing be interposed.

In this way friction is reduced, maintaining a high efficiency in the transmission of drive to the second blade (2).

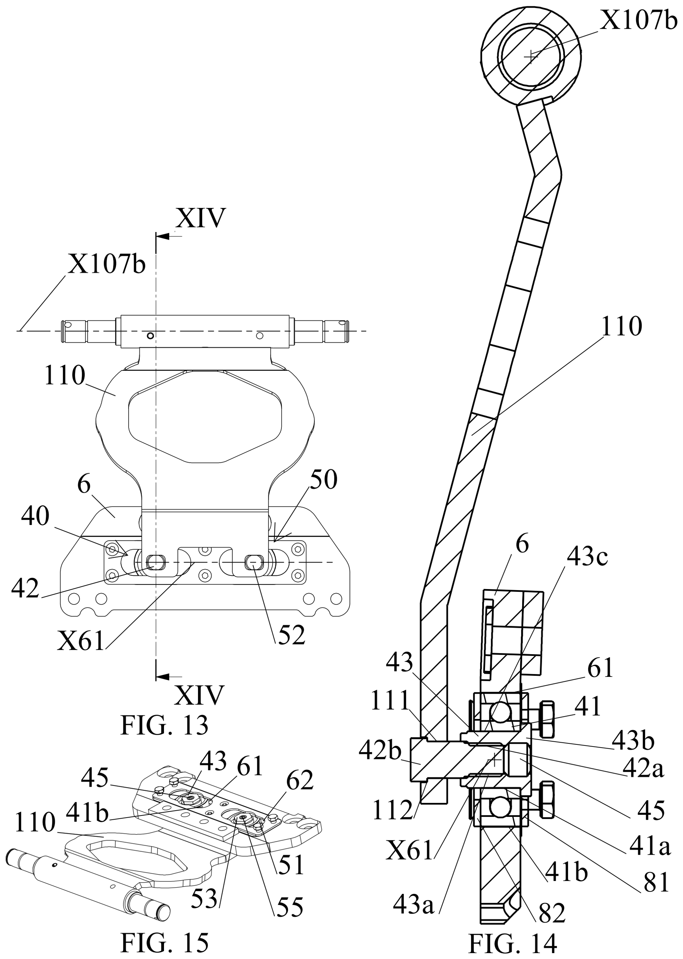

Figure 12 is an example of an embodiment in which a bushing is interposed and figure 14 is an example of an embodiment in which a roller bearing is interposed. The solution of figure 14 is interchangeable with that of figure 12, so that figure 3 and the following figures are also representative of the embodiment of figure 13 and figure 14. In the embodiment of figure 14 the first engagement part (41) is made with, or comprises, a roller bearing, precisely a ball bearing.

In the example embodiment of figure 12 the first coupling part (42) comprises a screw which has a head (42b) on the side of the connecting part (110) opposite the input part (3). The coupling part (42) might be however made with a screw with or without a head, threaded at one end for engaging with a nut, and between the shaft of the screw and the support part (6) there could be a bushing, a sliding bearing, or a roller bearing.

Preferably:
- the first coupling part (42) comprises a threading (42a);
   the first coupling unit (40) comprises a first locking part (43) which has a first threaded hole (43a);
- the first threaded hole (43a) engages the threading (42a) so that the first locking part (43) tightens together, i.e. brings into abutment, the input part (3) and the connecting part (110);
- the first engagement part (41) has a hole (41a) which receives the first locking part (43).

The at least a coupling unit (40, 50) performs in reality two functions: it must guarantee the coupling and must limit the degrees of freedom. The first locking part (43) simplifies the realisation of these functions because, together with the first coupling part (42), it closes, in a stack, the connecting part (110) and the input part (3), solidly constraining them, and because it offers a seat for the engaging of a bushing, of a sliding bearing or a roller bearing.

The first locking part (43) preferably comprises a head (43b) which limits the displacement of the first engagement part (41).

As well as providing a seat, an engaging area, for the first engagement part (41), the first locking part (43) can limit the displacement of the first engagement part (41) in a distancing direction from the input part (3) and from the connecting part (110) i.e. in an axial direction with respect to the first threaded hole (43a). The head (43b) extends radially with respect to the axis of the first threaded hole (43a) and achieves an abutment with prevents or limits the movement of the first engagement part (41).

With reference to figure 12, the first guide (61) prevents a displacement in an orthogonal direction to the axis of the first threaded hole (43a) while the thickness of the first guide (61), the head (43b) and the at least an abutment (81, 82) prevent a displacement in the direction of the axis of the first threaded hole (43a), as well as, overall, preventing the rotation of the connecting part (110) with respect to the guide axis (X107). The presence of a plurality of parts that cooperate to achieve this effect can contribute to reducing local stresses and/or ensures functioning even in a case of deformations or wear of one or more of these parts, after some work cycles.

The first locking part (43) preferably has a cylindrical outer lateral surface (43c) and the hole (41a) of the first engagement part (41) is cylindrical; typically it is also preferable that:
- the first coupling unit (40) comprises a first bushing (44), or a plurality of first bushings (44), which is interposed between the outer lateral surface (43) of the first locking part (43) and the hole (41a) of the first engagement part (41) so that the first engagement part (41) can rotate with respect to the first locking part (43); or
- the first engagement part (41) is a bearing which comprises an internal ring that delimits the hole (41a) and which engages the outer lateral surface (43c) and an external ring which engages the first guide (61).

Usually the first bushing (44), or first bushings (44), are made of an anti-friction material.

For the above reasons, the operating conditions of the mowing system (100) lead to preferring an engagement able to absorb minimal distortions in the movement of the bodies in order to take account of the inertias, of the wear and of the effects of external agents, for example on the first blade (1) and second blade (2).

To facilitate the sliding of the first engagement part (41), this part preferably has a cylindrical outer lateral surface (41b).

The first engagement part (41) preferably has a cylindrical outer lateral surface (41b) so as to be able to rotate on the first guide (61), and the first guide (61) is a through-slot which extends in a direction that is parallel to the second axis (X2).

The mowing system (100) also preferably comprises a cover (7) which is configured to cover the slot on a side of the support part (6) opposite a side facing towards the input part (3).

Although the slot is not necessary a through-slot, when it is the latter it is preferable to prevent external agents from disturbing the engagement between the first guide (61) and the first coupling unit (40), which can even limit the correct functioning of the preferred couplings between the parts described in the foregoing.

On the opposite side of the cover (7), as illustrated by way of example in figure 12, the configuration of the first coupling unit (40) and, possibly, the presence of an abutment (81, 82) can obtain the same effects as the cover (7).

As clearly shown by way of example in the appended figures of the drawings, it is preferable for the first coupling unit (40) to be replicated, i.e. that there is at least a second coupling unit (50) that engages a second guide (62) in an entirely similar way to what has been described for the first coupling unit (40) and with the preferred modalities described above and, below, for the first coupling unit (40).

It is therefore preferable that:
- the at least a coupling unit (40, 50) comprises a second coupling unit (50);
- the second coupling unit (50) comprises a second engagement part (51) and a second coupling part (52) which is in one piece with or is connected to the second engagement part (51);
- the input part (3) comprises a second hole;
- the connecting part (110) comprises a respective second hole;
- the second coupling part (52) engages the second hole and the respective second hole;
- the at least a guide (61, 62) comprises a second guide (62) which is engaged by the second engagement part (51) and which is configured to linearly guide the second engagement part (51) along a second guide axis that is parallel to the second axis (X2). In the appended figures of the drawings, the first guide axis (X61) and the second guide axis coincide.

With the doubling, alike to what occurs with two bolts in figure 2, the solidarity of the coupling is improved and, in the specific case, the response of the mowing system (100), even after many work cycles is also improved.

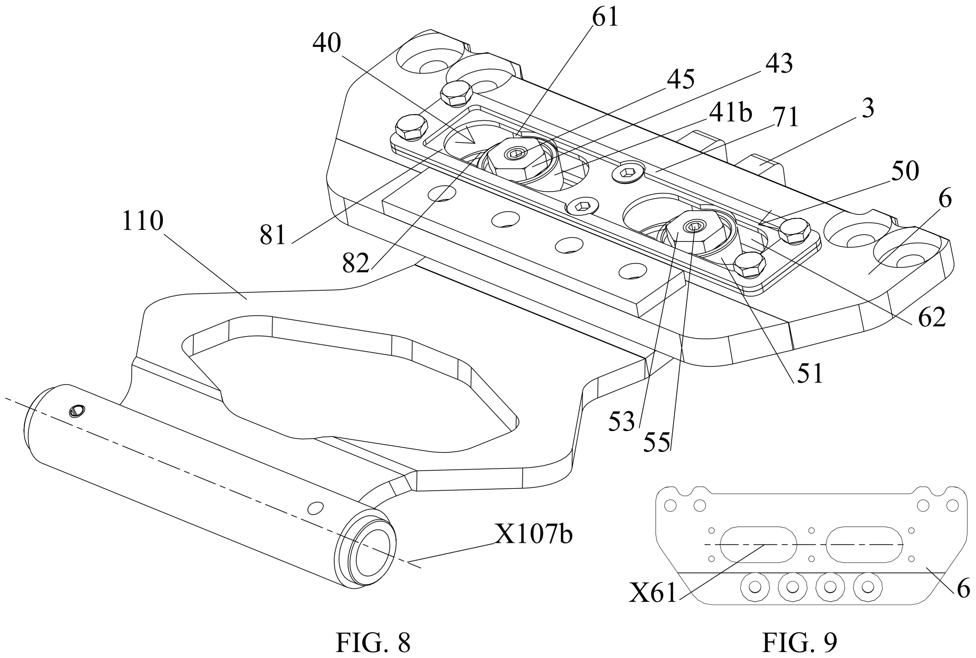

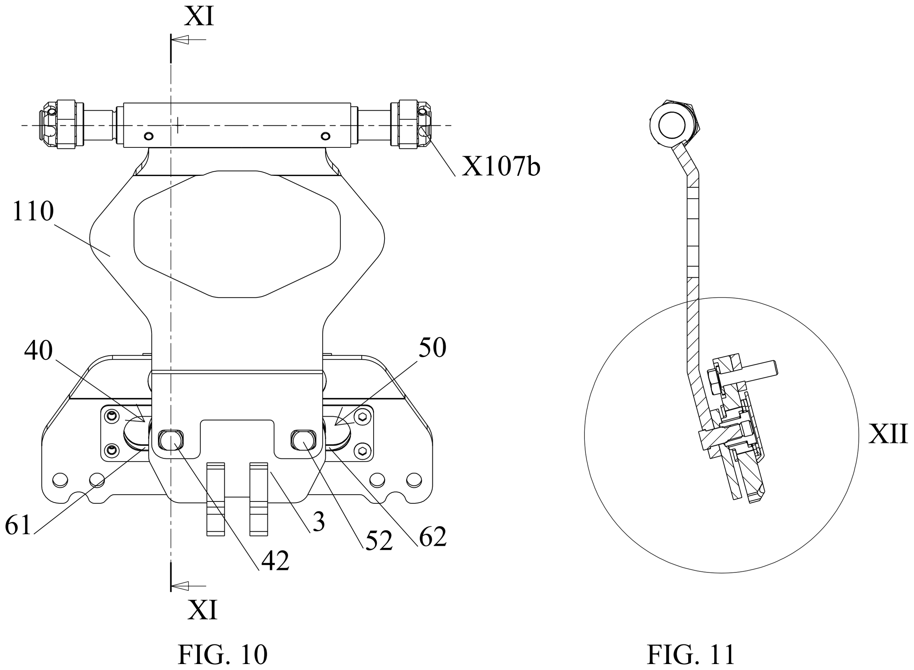

As already expressed, the preferred embodiments, discussed in the foregoing and herein below, of the first coupling unit (40) and the first guide (61) can be replicated for the second coupling unit (50) and for the second guide (62). Merely by way of example, in figures 8 and 10 it can be observed how a second locking part (53) and a second locking grub screw (55) perform as already described in relation to the first coupling unit (40).

In a case where the second guide (62) is a slot, the second guide (62) might be a portion of the same slot which realises the first guide (61) or, as in the example of the appended figures, might be realised with a distinct slot.

In relation to the above, it is preferable that the first guide (61) and the first engagement part (41) are configured in such a way that the first guide (61) prevents the rotation of the first engagement part (41) with respect to an axis that is parallel to the second axis (X2).

The input part (3) preferably comprises a first cylindrical seat (32) for receiving the first locking part (43); this facilitates the retaining of the connecting part (110) and the input part (3) between the first coupling part (42) and the first locking part (43).

The connecting part (110) preferably comprises a first seat (112) for accommodating the first coupling part (42); more preferably, the first seat (112) is a recess so as also to reduce the projecting of the first coupling part (42). The first seat (112) is preferably cylindrical.

As can be observed in figure 12 and, in part, in figure 14, the first cylindrical seat (32) and the first seat (112) can be made using a removal of material technique.

In the example embodiment of figure 12 the first coupling part (42) comprises a screw with a cylindrical head (42b) which engages the first seat (112) having a cylindrical shape. In the place of the head (42b) of the screw, a threading could be included cooperating with a nut which locks a washer.

The mowing system (100) preferably comprises at least an abutment (81, 82) which is solidly constrained to the support part (6) and which is configured to prevent extraction of the first engagement part (41) from the first guide (61). The at least an abutment (81, 82), beyond the above-described function, can also facilitate the mounting.

Further, the at least an abutment (81, 82) can be used for mounting a roller bearing, for example a ball bearing shown by way of example in figure 14.

In the embodiments of the appended figures the at least an abutment (81, 82) is secured to the support part (6) by threaded connections.

The embodiment illustrated by way of example in figure 12 also shows a spacer (71) between a first abutment (81) and the cover (7) which might be made in a single piece with the cover (7) with the first abutment (81). The spacer (71) enables increasing the volume beneath the cover (7). As well as protecting the components and the lubrication thereof, the cover (7) is preferably configured to protect the spacer (71) and/or the first abutment (81) from external agents, as shown by way of example by the folding towards the support part (6) in figure 12.

The second blade (2) is preferably configured to be more proximal to the ground (G) with respect to the first blade (1). In this case especially the input part (3) is preferably located between the connecting part (110) and the support part (6).

The first threaded hole (43a) is preferably a through-hole and the first coupling unit (40) comprises a locking grub screw (45) which engages the first threaded hole (43a) up until abutment with the first coupling part (42).

This increases the stability of the solution, even after many work cycles.

Preferably:
- the second output (107) comprises a first part (108) and a second part (109) each of which can rotate with respect to the support part (6) about a guide axis (X107) and the first part (108) and the second part (109) are movable with respect to the support part (6) in the direction of the guide axis (X107) so as to transmit alternating drive;
- the connecting part (110) is connected to the first part (108) and to the second part (109) so as to receive alternating drive according to the other axis (X107b);
- the at least a coupling unit (40, 50) engages the at least a guide (61, 62) so as to prevent a rotation of the connecting part (110) with respect to the support part (6) about the guide axis (X107), enabling displacements of the connecting part (110) with respect to the support part (6) along a direction parallel to the guide axis (X107).

Thus the advantages set out in the foregoing are obtained with a simple and economical configuration of the drive transformation unit (101); also, this configuration is advantageous in terms of reduced vibrations towards the operator and in terms of the response of the components to the possible forces generated by the external agents.

Figure 12 illustrates one of the connecting screws (9) which secure the support part (6) to a box (102) of the drive transformation unit (101).

In general terms, the drive transformation unit (101) comprises a support with respect to which the input (103), the first output (106) and the second output (107) move and the support part (6) can be a part of or be solidly constrained to the support. For this reason, in the above and in the claims the mobility relates to the support part (6). The support preferably comprises, or is realised with, or which is configured as a box (102).

The drive transformation unit (101) preferably comprises a box (102) which has an internal volume (V102) and the support part (6) is in one piece with or is solidly constrained to the box (102).

Preferably, as described in European Patent EP1125490, the drive transformation unit (101) comprises a cam (104) which is set in rotation by the input (103) and which is accommodated in the internal volume (V102) and the drive transformation unit (101) comprises seals (105) which delimit the internal volume (V102) and which guarantee the oil seal, so that the cam (104), as well as other components, is in an oil bath.

Figure 6 clarifies the functioning of the drive transformation unit (101) in which the cam (104) receives the circular motion from the input (103) and is constrained to move along a perpendicular direction to the rotation axis of the input (103) by the output part (106); the output part (106) is rotatable with respect to an axis that is parallel to the movement axis of the cam (104), so as to be rotated alternatingly in one direction and in the opposite direction of a complete rotation of the input (103). In figure 6 the cam (104) engages a cylindrical body which is housed in and which moves vertically within the output part (106).

At the same time a first part (108) and a second part (109) are movable with respect to the support, or to the box (102), in a transversal direction, orthogonal in figure 6, to the movement axis of the cam (104); in particular they are movable along the guide axis (X107). In figure 6 the first part (108) and the second part (109) are drivable horizontally.

In this way the cam (104), by means of profiled components which engage respective cavities made on the outer surface of the output part (106) in the case illustrated in figure 6, can set the first part (108) in motion in one direction and the second part (109) in an opposite direction to the first part (108) during a rotation of the input (103). In figure 6, the first part (108) is moved leftwards and the second part (109) is moved rightwards.

The connecting part (110), being connected both to the first part (108) and the second part (109), is set in movement alternatingly from the first part (108) and then from the second part (109) in the direction of the guide axis (X107), along the other axis (X107b). Further, the connecting part (110) ensures the displacement of the part, between the first part (108) and the second part (109), which at that moment is not moved by the displacement of the cam (104) and the first output part (106).

The drive transformation unit (101) is described herein briefly as it is not strictly part of the teachings of the present description, as it was already disclosed starting from the patent application granted with number EP1125490. However, the teachings of the present description find advantageous application in a mowing system (100) with a like drive transformation unit (101), in which the parts that transmit the drive have, or might have after many work cycles, a further degree of freedom with respect to what is achieved with the alternating drive of the second blade (2).

In the case of the illustration by way of example in figure 3, the connecting part (110) is connected to the first part (108) and to the second part (109), also via a respective S-shaped body and appropriate threaded connections and pins.

For the above reasons, as regards the stresses on the increasing of the cutting width (L) of the mowing system (100) the teachings of the present description attain greater advantages in a case where the cutting width (L) is greater than 1.5 metres, more preferably greater than 1.8 m, especially greater than 2 m.

The invention also relates to a tractor (1000).

An embodiment of the tractor (1000) comprises a motor (200) and a mowing system (100) according to this description, with the motor (200) connected to the input (103) so as to set the input (103) in rotation.

The connection can be realised with a shaft, for example a PTO shaft.

Preferably, though not exclusively, the tractor (1000) is one having two wheels (300), i.e. a motor mower, or self-propelling mower, as shown by way of example in figure 4.

The teachings of the present description can however be applied in other contexts, for example on tracked tractors (1000) or on four-wheeled tractors (1000).

The above is understood to have been described by way of non-limiting example, and any constructional variants are understood to fall within the protective ambit of the present technical solution, as claimed in the following.

## Claims

1. A mowing system (100) with a double-blade cutting bar (10), comprising:
- a support part (6);
- a first blade (1) which is movable with respect to the support part (6) along, or substantially along, a first axis (X1);
- a second blade (2) which is movable with respect to the support part (6) along, or substantially along, a second axis (X2) which is parallel, or substantially parallel, to the first axis (X1);
- a drive transformation unit (101) which comprises an input (103) for receiving drive, a first output (106) for supplying drive to the first blade (1) and a second output (107) for supplying drive to the second blade (2);
- a connecting part (110) which is connected to the second output (107) so as to receive alternating drive according to another axis (X107b) parallel to the second axis (X2);
- an input part (3) which is a part of the second blade (2) or which is connected to the second blade (2) so as to transmit alternating drive to the second blade (2) with respect to the support part (6);
- at least a coupling unit (40, 50) for fixing the input part (3) to the connecting part (110) so that the input part (3) is brought into movement;
**characterised in that** the support part (6) comprises at least a guide (61, 62) and the at least a coupling unit (40, 50) engages the at least a guide (61, 62) so as to limit or prevent a displacement of the connecting part (110) with respect to the support part (6) in at least a direction that is not parallel to the second axis (X2) and/or a rotation of the connecting part (110) with respect to the support part (6), enabling displacements of the connecting part (110) with respect to the support part (6) in a direction that is parallel to the second axis (X2).

2. The mowing system (100) of claim 1, wherein:
- the at least a coupling unit (40, 50) comprises a first coupling unit (40) which comprises a first engagement part (41) and a first coupling part (42) which is in one piece with or is connected to the first engagement part (41);
- the input part (3) comprises a first hole (31);
- the connecting part (110) comprises a respective first hole (111);
- the first coupling part (42) engages the first hole (31) and the respective first hole (111);
- the at least a guide (61, 62) comprises a first guide (61) which is engaged by the first engagement part (41) and which is configured to linearly guide the first engagement part (41) along a first guide axis (X61) parallel to the second axis (X2).

3. The mowing system (100) of claim 2, wherein a bushing, a sliding bearing or a roller bearing is interposed between the first coupling part (42) and the first guide (61).

4. The mowing system (100) of claim 2 or 3, wherein:
- the first coupling part (42) comprises a threading (42a);
- the first coupling unit (40) comprises a first locking part (43) which has a first threaded hole (43a);
- the first threaded hole (43a) engages the threading (42a) so that the first locking part (43) tightens together the input part (3) and the connecting part (110);
- the first engagement part (41) has a hole (41a) which receives the first locking part (43).

5. The mowing system (100) of claim 4, wherein the first locking part (43) comprises a head (43b) which limits the displacement of the first engagement part (41).

6. The mowing system (100) of claim 4 or 5, wherein the first locking part (43) has a cylindrical outer lateral surface (43c), wherein the hole (41a) of the first engagement part (41) is cylindrical and wherein:
- the first coupling unit (40) comprises a first bushing (44) which is interposed between the outer lateral surface (43) of the first locking part (43) and the hole (41a) of the first engagement part (41) so that the first engagement part (41) can rotate with respect to the first locking part (43); or
- the first engagement part (41) is a bearing which comprises an internal ring that delimits the hole (41a) and which engages the outer lateral surface (43c) and an external ring which engages the first guide (61).

7. The mowing system (100) of one of claims 2 to 6, wherein the first engagement part (41) has a cylindrical outer lateral surface (41b) so as to be able to rotate on the first guide (61), the first guide (61) is a through-slot which extends in a direction that is parallel to the second axis (X2) and the mowing system (100) comprises a cover (7) which is configured to cover the slot on a side of the support part (6) opposite a side facing towards the input part (3).

8. The mowing system (100) of any one of claims from 2 to 7, wherein:
- the at least a coupling unit (40, 50) comprises a second coupling unit (50);
- the second coupling unit (50) comprises a second engagement part (51) and a second coupling part (52) which is in one piece with or is connected to the second engagement part (51);
- the input part (3) comprises a second hole;
- the connecting part (110) comprises a respective second hole;
- the second coupling part (52) engages the second hole and the respective second hole;
- the at least a guide (61, 62) comprises a second guide (62) which is engaged by the second engagement part (51) and which is configured to linearly guide the second engagement part (51) along a second guide axis that is parallel to the second axis (X2).

9. The mowing system (100) of any one of claims from 2 to 8, wherein:
- the first guide (61) and the first engagement part (41) are configured in such a way that the first guide (61) prevents the rotation of the first engagement part (41) with respect to an axis that is parallel to the second axis (X2); and/or
- the input part (3) comprises a first cylindrical seat (32) for receiving the first locking part (43); and/or
- the mowing system (100) comprises at least an abutment (81, 82) which is solidly constrained to the support part (6) and which is configured to prevent extraction of the first engagement part (41) from the first guide (61); and/or
- the second blade (2) is configured to be more proximal to the ground (G) with respect to the first blade (1); and/or
- the input part (3) is located between the connecting part (110) and the support part (6).

10. The mowing system (100) of claim 4 or any one claim dependent on claim 4, wherein:
- the first threaded hole (43a) is a through-hole and the first coupling unit (40) comprises a locking grub screw (45) which engages the first threaded hole (43a) until abutment with the first coupling part (42).

11. The mowing system (100) of any one of claims 1 to 10, wherein:
- the second output (107) comprises a first part (108) and a second part (109) each of which can rotate with respect to the support part (6) about a guide axis (X107) and the first part (108) and the second part (109) are movable with respect to the support part (6) in the direction of the guide axis (X107) so as to transmit alternating drive;
- the connecting part (110) is connected to the first part (108) and to the second part (109) so as to receive alternating drive according to the other axis (X107b);
- the at least a coupling unit (40, 50) engages the at least a guide (61, 62) so as to prevent a rotation of the connecting part (110) with respect to the support part (6) about the guide axis (X107), enabling displacements of the connecting part (110) with respect to the support part (6) along a direction parallel to the guide axis (X107).

12. The mowing system (100) of the preceding claim, wherein:
- the drive transformation unit (101) comprises a box (102) which has an internal volume (V102) and the support part (6) is in one piece with or is solidly constrained to the box (102);
- the drive transformation unit (101) comprises a cam (104) which is set in rotation by the input (103) and which is accommodated in the internal volume (V102) and seals (105) which delimit the internal volume (V102) and which guarantee oil seal.

13. The mowing system (100) of any one of claims 1 to 12 having a cutting width (L) larger than 1.5 m, preferably greater than 1.8 m.

14. A tractor (1000) comprising a motor (200) and a mowing system (100) according to one of claims from 1 to 13, wherein the motor (200) is connected to the input (103) so as to set the input (103) in rotation.
